# EUROPÄISCHE PATENTSCHRIFT

(11) **EP 1 684 147 B1**
(45) Veröffentlichungstag und Bekanntmachung des Hinweises auf die Patenterteilung: **09.07.2014**
(21) Anmeldenummer: 06100207.7
(22) Anmeldetag: 10.01.2006
(51) Int. Cl.: G05D 23/19

(54) **Heizkörperregler**
Radiator controller
Régulateur de radiateur de chauffage

(30) Priorität: 20.01.2005 DE 102005002770
(43) Veröffentlichungstag der Anmeldung: 26.07.2006
(73) Patentinhaber: HONEYWELL AG, 71101 Schönaich (DE)
(72) Erfinder: Keller, Manfred, 70771, Leinfelden-Echterdingen (DE); Schilling, Jürgen, 71144, Steinenbronn (DE); Alber, Kurt, 70771, Leinfelden-Echterdingen (DE)
(74) Vertreter: TBK

(56) Entgegenhaltungen:
- EP-A2- 0 229 942
- WO-A1-99/15822
- DE-A1- 2 800 704
- DE-A1- 3 401 154
- DE-A1- 3 515 590

## Beschreibung

Die Erfindung bezieht sich auf einen Heizkörperregler mit einer Antriebseinrichtung zum Betätigen eines Heizkörperventils, die das Heizkörperventil entsprechend einer gewünschten Temperatur einstellt.

Heizkörperregler dieser Art sind beispielsweise bereits aus der DE 40 01 801 A1 oder der DE 2800704 bekannt.

Bei dem bekannten Heizkörperregler wird vor Beginn der Regelung ein Initialisierungsablauf durchgeführt, bei dem zunächst die beiden Endpositionen des Heizkörperventils angefahren und abgespeichert werden. Auf der Grundlage der dabei abgespeicherten Positionswerte wird dann die nachfolgende Regelung entsprechend der gewünschten Temperatur durchgeführt.

Bei einer solchen Vorgehensweise liegen die den Endpositionen des Ventils entsprechenden Positionen für den gesamtem Regelungszeitraum fest. Tritt dabei ein Positionierungsfehler während der Regelung auf oder verändern sich die mechanischen Komponenten der Anordnung, so dass die gespeicherte Position nicht mehr mit der tatsächlichen Position übereinstimmt, führt dies zu Regelfehlern. Darüber hinaus ist dieser Initialisierungsablauf zeit- und energieaufwendig, was insbesondere bei batteriebetriebenen Geräten unerwünscht ist.

Der Erfindung liegt die Aufgabe zugrunde, einen verbesserten Heizkörperregler anzugeben.

Diese Aufgabe wird durch einen Heizkörperregler mit den in Patentanspruch 1 angegebenen Merkmalen gelöst.

Vorteilhafte Weiterbildungen der Erfindung sind Gegenstand der Unteransprüche.

Der vorgeschlagene Heizkörperregler weist eine Antriebseinrichtung zum Betätigen eines Heizkörperventils, eine Bewegungserfassungseinrichtung zum Erfassen einer Bewegung der Antriebseinrichtung und zum Ausgeben eines Bewegungssignals, eine Temperaturerfassungseinrichtung zur Erfassung der Ist-Temperatur und zum Ausgeben eines Temperatursignals und eine Steuereinrichtung auf. Die Steuereinrichtung dient zum Erzeugen eines Steuersignals für die Antriebseinrichtung unter Berücksichtigung des Temperatursignals und einer den Öffnungsgrad des Heizkörperventils betreffenden Information und zum Erfassen des Erreichens einer Endposition des Heizkörperventils anhand des Bewegungssignals. Bei Erreichen einer der Endpositionen aktualisiert die Steuereinrichtung die den Öffnungsgrad betreffende Information entsprechend der jeweils erreichten Endposition. So wird der Öffnungsgrad beispielsweise bei einer voll geschlossenen Position auf Null gesetzt.

Durch diese Vorgehensweise können Fehlpositionierungen durch nicht mehr aktuelle Positionsdaten der Endpositionen des Heizkörperventils sicher ausgeschlossen werden, da während eines normalen Regelvorgangs häufiger die Endposition angefahren wird und hierbei stets eine Aktualisierung der den Öffnungsgrad des Ventils betreffenden Information möglich ist. Darüber hinaus ist durch diese Vorgehensweise auch eine ursprüngliche Initialisierung des Heizkörperreglers überflüssig, bei der beide Endpositionen nacheinander angefahren würden.

Wird dagegen keine Endposition bei einem Regelvorgang erreicht, wird die den Öffnungsgrad betreffende Information bei jeder Ansteuerung der Antriebseinrichtung entsprechend dem jeweiligen Steuersignal aktualisiert.

Das von der Steuereinrichtung zur Steuerung der Antriebseinrichtung verwendete Steuersignal wird entsprechend der Differenz zwischen einer Soll-Temperatur und der Ist-Temperatur ermittelt. Die Steuereinrichtung bestimmt hieraus die Antriebsdauer sowie die Antriebsrichtung der Antriebseinrichtung. Wird keine Endposition erreicht, lässt sich die den Öffnungsgrad betreffende Information stets auch entsprechend dem jeweiligen Steuersignal mit hoher Genauigkeit aktualisieren.

Vorteilhafterweise wird bei Inbetriebnahme des Heizkörperreglers eine den Öffnungsgrad betreffende Information verwendet, die einem vorbestimmten Öffnungsgrad entspricht. Dies erlaubt die Verwendung eines Ausgangswerts mit ausreichender Genauigkeit. Geht der Regler bei der Inbetriebnahme von einem falschen Öffnungsgrad aus, führt dies dazu, dass er umso schneller eine Endposition erreicht und sich entsprechend aktualisieren kann.

Handelt es sich bei der Inbetriebnahme um eine erstmalige Inbetriebnahme, geht die Steuereinrichtung von einem mittleren Öffnungsgrad von beispielsweise 50 % aus. Vorteilhafterweise wird der Heizkörperregler herstellerseits so ausgeliefert, dass er in der Mitte des Regelbereichs steht.

Handelt es sich bei der Inbetriebnahme um eine Wiederinbetriebnahme, geht die Steuereinrichtung dagegen von dem zuletzt verwendeten Öffnungsgrad aus.

Diese Unterscheidung erlaubt eine noch genauere Bestimmung des Ausgangspunkts für die Regelung des Heizkörperventils.

Die Steuereinrichtung verdoppelt die Antriebsdauer der Antriebseinrichtung, wenn die Temperaturdifferenz zwischen der Solltemperatur und der Isttemperatur einen vorbestimmten Wert übersteigt. Hierdurch kann bei großen Temperaturdifferenzen die Solltemperatur wesentlich schneller erreicht werden. Da bei großen Temperaturdifferenzen die Zeitdauer bis zur Erreichung der Solltemperatur über der Zeitdauer zwischen zwei Regelschritten liegt, kann trotzdem eine Überschreitung des Regelzieles verhindert werden.

Die Steuereinrichtung hat Zugriff auf eine Zuordnungstabelle, die einer Mehrzahl von unterschiedlichen Solltemperaturen einen jeweils entsprechenden Öffnungsgrad zuordnet, bei dem sich die entsprechende Solltemperatur normalerweise einstellt. Mit Hilfe dieser Tabelle kann die Steuereinrichtung schnell und auf einfache Art und Weise den neuen anzusteuernden Öffnungsgrad bzw. die dementsprechend erforderliche Veränderung des Öffnungsgrades bestimmen.

Diese Tabelle umfasst eine Mehrzahl konkreter Werte. In der Praxis wird die gewünschte Solltemperatur häufig zwischen den in der Tabelle angelegten Werten liegen. In diesem Fall kann die Steuereinrichtung vorteilhafter Weise aus zwei benachbarten Öffnungsgraden durch Interpolation den entsprechenden Öffnungsgrad für eine Solltemperatur ermitteln, die selbst nicht in der Tabelle vermerkt ist. Diese Möglichkeit erlaubt es, mit einer Tabelle mit nur einer geringen Anzahl von Wertepaaren auszukommen, was den erforderlichen Speicherbedarf entsprechend reduziert.

Der einer bestimmten Solltemperatur zugeordnete Öffnungsgrad ist der Öffnungsgrad, den das Ventil aufweist, wenn die Raumtemperatur der Solltemperatur entspricht. Wird bei der Regelung der Sollöffnungsgrad verwendet, stellt sich nach einiger Zeit auch die Solltemperatur ein. Jedoch geht dieser Regelvorgang wesentlich schneller, wenn die Steuereinrichtung bis zur Erreichung der Solltemperatur einen Öffnungsgrad ansteuert, der über dem erforderlichen Öffnungsgrad liegt.

In der Praxis hat sich herausgestellt, dass bei einer solchen Vorgehensweise die Verwendung eines Öffnungsgrades von Vorteil ist, der etwa zwei Mal der Differenz zwischen dem Ist-Öffnungsgrad und dem erforderlichen Öffnungsgrad entspricht.

Bei Erreichen der Solltemperatur stellt die Steuereinrichtdung dann den zuvor zu hoch eingestellten anzusteuernden Öffnungsgrad wieder auf den tatsächlich für diese Solltemperatur erforderlichen Öffnungsgrad zurück, so dass der Regelvorgang genau bei der Solltemperatur endet.

Unter ungünstigen Bedingungen kann der Fall auftreten, dass die Ist-Temperatur auch nach einem längeren Regelvorgang nicht die Solltemperatur erreicht. Wenn die Steuereinrichtung dies feststellt, kann sie die Tabellenwerte nach einem vorbestimmten Schema verändern. Hierdurch kann sichergestellt werden, dass der Regelvorgang innerhalb einer vorgegebenen Zeitspanne sein Ziel erreicht oder aber mit veränderten Tabellenwerten erneut durchgeführt wird.

Die Steuereinrichtung kann die neuen Tabellenwerte nach einer vorbestimmten Zeit für die nachfolgenden Steuervorgänge übernehmen und für die nachfolgenden Steuervorgänge als Ausgangswerte verwenden. Da Heizkörperregler meistens in ein- und demselben Zimmer eingebaut sind, lernt sich der Heizkörperregler somit von selbst auf die an seinem Einsatzort vorherrschenden Umgebungsbedingungen ein.

Alternativ zur Verwendung einer Tabelle, die eine Zuordnung von Solltemperaturen und Öffnungsgraden umfasst, kann auch die Verwendung von Kennlinien vorteilhaft sein.

Die Steuereinrichtung bestimmt bei dieser Alternative eine Veränderung des Öffnungsgrades unter Berücksichtigung eines Produktes der Temperaturdifferenz und einer ersten Konstante. Zwischen der Temperaturdifferenz und dem Öffnungsgrad besteht ein linearer Zusammenhang. Eine entsprechende Kennlinie dieses Zusammenhanges würde einer Geraden entsprechen, wobei die erste Konstante die Steigung dieser Geraden darstellt. Eine solche Vorgehensweise ermöglicht eine besonders einfache Bestimmung einer gewünschten Veränderung des Öffnungsgrades. Desweiteren führt eine solche Bestimmung des Sollwertes dazu, dass die Solltemperatur rasch erreicht wird bzw. die Temperaturdifferenz rasch zu Null wird.

In einigen Fällen kann es jedoch passieren, dass auch nach einer vorbestimmten Anzahl von Regelschritten unter Verwendung der ersten Konstante eine Veränderung der Temperaturdifferenz einen vorbestimmten Wert unterschreitet, bzw. die Solltemperatur immer noch nicht erreicht ist. In diesem Fall bestimmt die Steuereinrichtung eine Veränderung des Öffnungsgrades unter Berücksichtung eines Produktes der Temperaturdifferenz und einer zweiten Konstante. Die zweite Konstante ist größer als die erste Konstante. Dies entspricht bei einer den Öffnungsgrad und die Temperatur betreffenden Kennlinie einer steileren Steigung der Geraden. Durch diese Maßnahme lässt sich auch unter schwierigen Randbedingungen, wie beispielsweise einer ungewöhnlich tiefen Außentemperatur das gewünschte Regelziel schnell erreichen.

Da sich die äußeren Bedingungen für einen Regelvorgang bei der Einstellung der Solltemperatur mit Hilfe eines Heizkörperreglers im allgemeinen nur langsam ändern, setzt die Steuereinrichtung die Verwendung der zweiten Konstante bei den nachfolgenden Regelschritten nach Erreichung des Sollwertes für eine vorbestimmte Zeitdauer von beispielsweise 24 Stunden fort. Hierdurch kann verhindert werden, dass bereits beim nächsten Regelvorgang unter denselben Regelbedingungen wieder zunächst unter Verwendung der ersten Konstante geregelt wird. Eine entsprechende Verzögerung bei der Erreichung des Regelziels wird dadurch verhindert.

Um eine möglichst genaue Regelung zu erreichen, hält die Steuereinrichtung die Geschwindigkeit der mittels der Bewegungserfassungseinrichtung erfassten Bewegung der Antriebseinrichtung auf einem vorbestimmten Wert. Dies schafft sie vorteilhafter Weise durch eine Veränderung der dem Motor zugeführten Leistung, beispielsweise durch eine Erhöhung oder Verringerung der Motorspannung.

Bei dem Heizkörperregler wird der gewünschte Öffnungsgrad dadurch eingestellt, dass der Motor für eine vorbestimmte Zeitdauer betrieben wird. Anders herum ausgedrückt, geht die Steuereinrichtung davon aus, dass sich der Öffnungsgrad nach Beendigung der Ansteuerung der Antriebseinrichtung in einem Regelschritt auf den gewünschten Wert verändert hat. Durch eine Veränderung der äußeren Umstände kann es aber vorübergehend zu einer Unterschreitung der vorbestimmten Geschwindigkeit kommen. Dies gleicht die Steuereinrichtung durch eine geeignete zeitweise Überschreitung der vorbestimmten Geschwindigkeit aus. Diese zeitweise Überschreitung führt sie in einer solchen Form aus, dass spätestens bis zur Beendigung des jeweiligen Regelschrittes der Ausgleich erzielt ist. Durch diese Maßnahme kann stets der aktuelle Öffnungsgrad auf korrekte Art und Weise bestimmt werden.

Auch die äußeren Bedingungen, die zu einer Veränderung der Geschwindigkeit der Antriebseinrichtung führen können, sind meistens konstant oder verändern sich nur langsam. Aus diesem Grund ist es von Vorteil, wenn sich die Steuereinrichtung die für die Erreichung der vorbestimmten Geschwindigkeit erforderliche Leistung merkt und bei einem nachfolgenden Regelschritt bzw. den nachfolgenden Regelschritten verwendet. Dies vermeidet ansonsten gegebenenfalls erforderliche Korrekturschritte während eines Regelschrittes, die nicht immer zum gewünschten Regelziel führen.

Üblicherweise sind die zu steuernden Ventile mit einem Stift versehen, der durch eine Feder vorgespannt ist. Dies hat zur Folge, dass sich das Ventil leichter öffnen als schließen lässt. Um dieses Problem zu lösen, kann sich die Steuereinrichtung einen ersten Wert für die erforderliche Leistung beim Schließen das Ventils und einen zweiten Wert für die erforderliche Leistung beim Öffnen des Ventils merken. Auch diese Maßnahme dient zur Perfektionierung des Regelvorgangs.

Die Erfindung wird nachfolgend anhand der Figuren näher erläutert.

Die Fig. 1 zeigt einen Heizkörperregler.

Die Fig. 2 zeigt ein im dem Heizkörperregler verwendetes Regelverfahren.

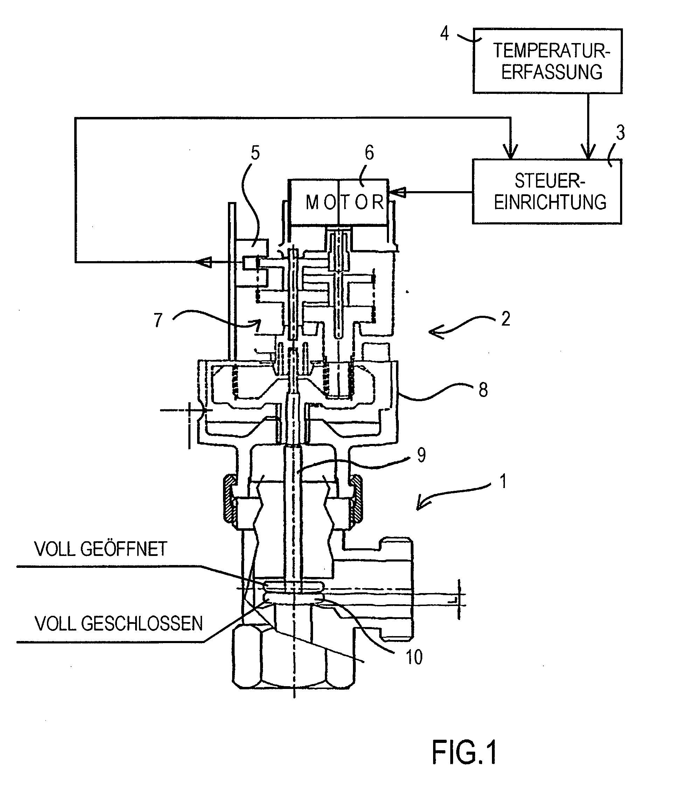

In der Fig. 1 ist mit 1 ein Ventil, mit 2 eine Antriebseinrichtung, mit 3 eine Steuereinrichtung, mit 4 eine Temperaturerfassungseinrichtung, mit 5 eine Bewegungserfassungseinrichtung, mit 6 ein Motor, mit 7 ein Getriebe, mit 8 ein Adapter, mit 9 eine Ventilspindel und mit 10 ein Ventilkörper bezeichnet.

Bei dem Ventil 1 handelt es sich um ein herkömmliches Heizungsventil.

Die Antriebseinrichtung 2 umfasst die Steuereinrichtung 3, die Temperaturerfassungseinrichtung 4, die Bewegungserfassungseinrichtung 5, den Motor 6, das Getriebe 7 und den Adapter 8.

Grundsätzlich können die Temperaturerfassungseinrichtung 4 und/oder die Steuereinrichtung 3 auch von der Antriebseinrichtung 2 getrennt angeordnet sein.

Die Antriebseinrichtung 2 oder eine von der Antriebseinrichtung 2 getrennt angeordnete Komponente kann eine Eingabeeinrichtung zur Eingabe der gewünschten Soll-Temperatur und anderer Parameter, sowie eine Anzeigeeinrichtung zur Anzeige der bei der Regelung vorkommender Parameter umfassen, die in der Figur aber nicht gezeigt ist.

Bei der in der Figur gezeigten Anordnung treibt der Motor 6 über eine Mehrzahl von Zahnrädern des Getriebes 7 und über den Adapter 8, der die Drehbewegung des Getriebes in eine Hubbewegung umsetzt, die Ventilspindel 9 des Ventils 1 an. Dabei kann der Ventilkörper 10 zwischen einer voll geöffneten und einer voll geschlossenen Position bewegt werden.

Die Antriebseinrichtung 2 ist von dem Ventil 1 demontierbar. Ist auf dem Ventil 1 keine Antriebseinrichtung 2 angeordnet, wird durch eine nicht gezeigte Feder das Ventil 1 bzw. die Ventilspindel 9 in die voll geöffnete Position verbracht. Die aufgesetzte Antriebseinrichtung 2 schiebt die Ventilspindel 9 in das Ventil, um das Ventil zu schließen und lässt die Ventilspindel ausrücken, um das Ventil zu öffnen. In beiden Bewegungsrichtungen kann die Antriebseinrichtung 2 äußerst präzise Zwischenpositionen anfahren.

Die Antriebseinrichtung 2 weist darüber hinaus noch die Bewegungserfassungseinrichtung 5 auf, die ein Bewegungssignal an die Steuereinrichtung ausgibt, über das sich eine Bewegung oder Nicht-Bewegung der Antriebseinrichtung ermitteln lässt.

Die Bewegungserfassungseinrichtung kann auf jede beliebige Art und Weise arbeiten. Es kann sich um einen optischen, einen mechanischen, einen kapazitiven oder induktiven Sensor handeln, der die Bewegung eines beliebigen Zahnrads, dessen Getriebes 7 oder eines anderen beweglichen Teiles der Antriebseinrichtung erfasst. Vorzugsweise wird dabei die Bewegung eines sich möglichst schnell drehenden Teils des Getriebes erfasst. Hierdurch kann die Bewegung der Antriebseinrichtung mit höherer Genauigkeit erfasst werden. Bei Verwendung einer Lichtschranke enthält das Bewegungssignal Impulse, die ein Passieren eines beweglichen Teils der Antriebseinrichtung 2 an einem festen Teil repräsentieren. An dem Auftreten oder Ausbleiben von Impulsen kann die Steuereinrichtung 3 daher eine Bewegung oder einen Stillstand der Antriebseinrichtung 2 erkennen.

Tritt dabei ein Stillstand auf, während gleichzeitig der Motor 6 angetrieben wird, erkennt die Steuereinrichtung 3 das Erreichen einer Endposition.

Bei dem Motor 6 handelt es sich um einen Gleichstrommotor. Es kann aber auch jede andere Art von Motor verwendet werden. Je nach der Art des verwendeten Motors ist ein größeres oder ein kleineres oder gar kein Getriebe 7 erforderlich.

Der Motor 6 erzeugt eine Drehbewegung. Bei Verwendung eines Hubantriebs kann über das Getriebe 7 hinaus auch der Adapter 8 entfallen, da dann eine Umwandlung der Drehbewegung in eine Hubbewegung überflüssig ist.

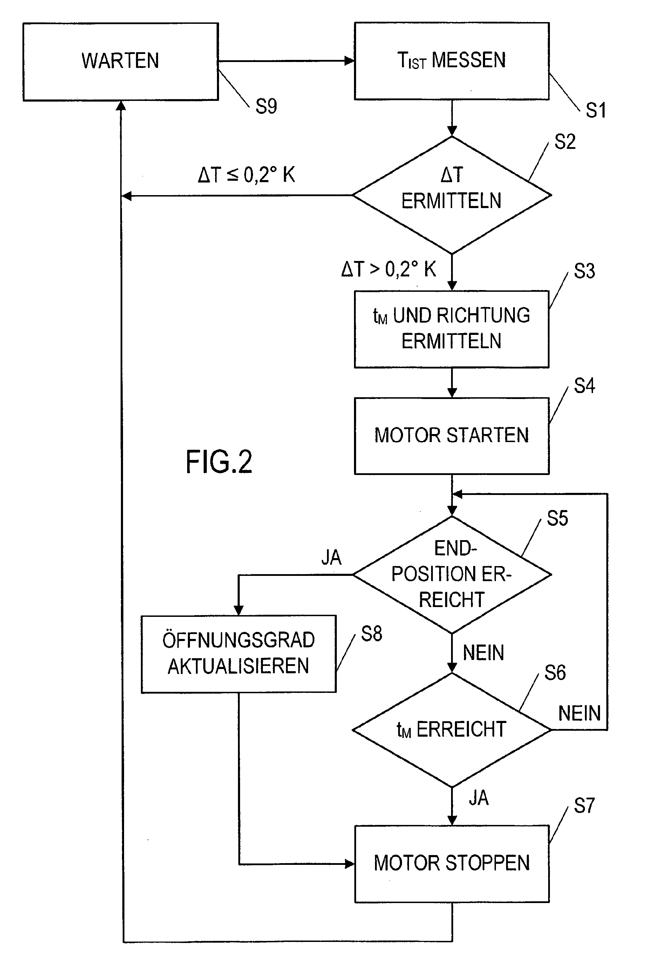

Das in der Fig. 2 gezeigte Regelverfahren arbeitet wie folgt.

In einem Schritt S1 wird die Ist-Temperatur ermittelt.

In einem Schritt S2 wird ein Temperaturunterschied ΔT zwischen der Ist-Temperatur und einer gewünschten Soll-Temperatur ermittelt und geprüft, ob dieser Temperaturunterschied größer als ein vorbestimmter Schwellenwert von beispielsweise 0,2°K bzw. 0,2°C ist.

Ist die ermittelte Temperaturdifferenz ΔT kleiner oder gleich 0,2°K, verzweigt das Regelverfahren zu einem Schritt S9.

Liegt die Temperaturdifferenz ΔT über 0,2°K, wird in einem Schritt S3 die Zeitdauer und die Richtung ermittelt, mit der eine Antriebseinrichtung betrieben werden soll.

In einem Schritt S4 wird der Motor und ein nicht gezeigter Zeitgeber gestartet.

In einem Schritt S5 wird geprüft, ob eine Endposition erreicht wurde. Diese Überprüfung führt die Steuereinrichtung anhand des Bewegungssignals durch. Wird eine Endposition erfasst, wird in einem Schritt S8 eine Information betreffend dem Öffnungsgrad aktualisiert und in einem Schritt S7 der Motor gestoppt.

Wird im Schritt S5 keine Endposition erfasst, wird im Schritt S6 geprüft, ob bereits die Zeitdauer zum Betrieb der Antriebseinrichtung verstrichen ist, was anhand des nicht gezeigten Zeitgebers geschieht. Ist die Zeit noch nicht verstrichen, verzweigt das Regelverfahren zurück zum Schritt S5. Ist die Zeit verstrichen, wird im Schritt S7 der Motor gestoppt und daraufhin beim Schritt S9 fortgefahren.

Im Schritt S9 wird gewartet, bis eine vorbestimmte Zeitdauer verstreicht. Diese Zeitdauer kann beispielsweise zu fünf Minuten gewählt werden und stellt sicher, dass der zumeist batteriebetriebene Heizkörperregler das Regelverfahren nicht zu häufig durchführt.

Bei dem oben angegebenen Schwellenwert im Schritt S2 handelt es sich nur um ein Beispiel. Auch größere oder kleinere Schwellenwerte sind möglich.

Die Wartezeit im Schritt S9 ist nicht auf die angegebene Wartezeit begrenzt. Jede andere Wartezeit kann eingestellt werden.

Vorzugsweise kann die Wartezeit im Schritt S9 auch entsprechend der Temperaturdifferenz zwischen der Soll-Temperatur und der Ist-Temperatur festgelegt werden. Bei einer kleinen Temperaturdifferenz wird eine längere Wartezeit und bei einer großen Temperaturdifferenz eine kürzere Wartezeit festgelegt.

Das gezeigte Regelverfahren beginnt im Schritt S1. Es kann aber auch im Schritt S9 beginnen.

Die Steuereineinrichtung 3 speichert eine Information bezüglich dem Öffnungsgrad, vorzugsweise in einem Speicherelement, das seine Information auch nach Abschaltung der Versorgungsspannung behält.

Die Steuereinrichtung 3 aktualisiert die gespeicherte Information bezüglich des Öffnungsgrads nach jeder Ansteuerung der Antriebseinrichtung. Wird bei der Ansteuerung eine Endposition erreicht, erfolgt die Aktualisierung entsprechend der jeweils erreichten Endposition. Wird während der Ansteuerung keine Endposition erreicht, erfolgt die Aktualisierung anhand des Ansteuersignals, welches Informationen über die Richtung und das Ausmaß der Bewegung enthält.

Die Aktualisierung der Information bezüglich des Öffnungsgrads kann im Schritt S3, im Schritt S4 oder im Schritt S7 erfolgen. Vorteilhafterweise geschieht sie im Schritt S3. Dann erfolgt gegebenenfalls automatisch eine weitere Aktualisierung im Schritt S8.

Als Information bezüglich des Öffnungsgrads eignet sich eine beliebige Zahl. Die Anzahl der Stellen dieser Zahl orientiert sich an der gewünschten Genauigkeit. Diese Zahl kann einem Öffnungsgrad in Prozent oder als Faktor, einem beliebigen Zählwert einer Zähleinrichtung oder einem Zeitwert entsprechen. Als Zeitwert repräsentiert sie beispielsweise die erforderliche Dauer der Ansteuerung der Antriebseinrichtung, um die voll geschlossene Position zu erreichen. Bei Erreichen der entsprechenden Endposition (voll geschlossene Position) wird diese Information dann auf Null gesetzt.

Der oben beschriebene Heizkörperregler berücksichtigt beide Endpositionen und aktualisiert die den Öffnungsgrad betreffende Information entsprechend der jeweils erreichten Endposition. Alternativ hierzu kann der Heizkörperregler die Information bezüglich des Öffnungsgrads nur an einer Endposition aktualisieren und an der anderen Endposition nicht. Diese Ausführungsform aktualisiert die Information bezüglich des Öffnungsgrads nur in der Endposition, in der das Ventil 1 voll geschlossen ist. An der anderen Endposition wird lediglich der Motor 6 gestoppt. Diese Vorgehensweise ist insbesondere dann vorteilhaft, wenn der Stellbereich des Heizkörperreglers größer als der Stellbereich des Ventils 1 ist. Dann erfasst der Heizkörperregler in Wirklichkeit nicht die voll geöffnete Position des Heizkörperventils, sondern das Ende des Stellbereichs des Heizkörperreglers. Die Berücksichtigung dieses Endpunkts würde dann zu Regelfehlern führen.

Im Schritt 3 wird die Dauer bestimmt, für die die Antriebseinrichtung eingeschaltet wird, sowie die Richtung, in die sich die Antriebseinrichtung bewegen soll, um das zu betätigende Heizkörperventil entweder zu öffnen oder zu schließen. Die dabei ermittelte Antriebsdauer führt insbesondere bei kleinen Temperaturdifferenzen zwischen der Solltemperatur und der Isttemperatur schnell zu dem gewünschten Regelziel. Beim Auftreten großer Temperaturdifferenzen jedoch kann es sein, dass die Dauer zum Ausregeln der Temperaturdifferenz über der Dauer für einen Regelschritt des in der Figur gezeigten Regelalgorithmusses liegt oder ein Vielfaches davon beträgt. Unter einem Regelschritt wird in diesem Zusammenhang das einmalige Durchlaufen des in der Figur 2 gezeigten Algorithmusses von den Schritten S1 bis S9 verstanden. In diesem Fall verdoppelt die Steuereinrichtung schlichtweg die Antriebsdauer und verdoppelt dadurch auch die Veränderung des Öffnungsgrads. Dies führt zu einer rascheren Erreichung des Regelzieles, wenn die übermäßige Veränderung des Öffnungsgrades vor Erreichen des Regelzieles wieder verringert wird. Dies ist aber durch die Zeitverhältnisse zwischen der Dauer bis zur Erreichung des Regelzieles und der Dauer eines Regelschrittes ohne Weiteres möglich.

Häufig benötigt ein Heizkörper zur Erhöhung der Raumtemperatur um 3 °C eine halbe Stunde. Die Dauer eines Regelschrittes liegt zwischen fünf und zehn Minuten. Wird sie dabei zu fünf Minuten gewählt, treten während der Regelzeit sechs Regelschritte auf. Dies reicht aus, um eine Verdoppelung des Öffnungsgrades rechtzeitig vor Erlangung eines Regelzieles wieder zurück zu nehmen. Bei dem gezeigten Beispiel kann der vorbestimmte Wert beispielsweise zu drei Grad gewählt werden. Eine solche Wahl kann fest erfolgen, oder für die Bedienperson des Heizkörperreglers frei programmierbar bleiben.

Die Steuereinrichtung des Heizkörperreglers hat Zugriff auf eine Tabelle. In dieser Tabelle ist einer Mehrzahl von unterschiedlichen Solltemperaturen ein jeweils entsprechender Öffnungsgrad zugeordnet. Beispielsweise entspricht eine Solltemperatur von 20°C einem Öffnungsgrad von 40 % und eine Solltemperatur von 24°C einem Öffnungsgrad von 60 %. Wird eine Solltemperatur von 24°C gewünscht, wird das zu steuernde Regelventil voraussichtlich am Ende des Regelvorgangs einen Öffnungsgrad von 60 % aufweisen.

Jede Tabelle besteht jedoch lediglich aus einer endlichen Anzahl von Werten, wie beispielsweise 10 Regelwerten zwischen 10°C und 25°C. Wird nun eine Solltemperatur eingestellt, die zwischen zwei Tabellenwerten liegt, kann die Steuereinrichtung der Tabelle selbstverständlich nicht den dieser Solltemperatur zugeordneten Öffnungsgrad entnehmen. In diesem Fall führt sie eine Interpolation durch. Hierzu entnimmt die Tabelle den Öffnungsgrad für einen enthaltenen Solltemperatur-Wert unterhalb der gewünschten Solltemperatur und einen Öffnungsgrad für einen enthaltenen Solltemperatur-Wert oberhalb der gewünschten Solltemperatur. Mit diesen beiden Öffnungsgraden kann sie dann durch lineare Interpolation den Öffnungsgrad für einen Solltemperatur-Wert ermitteln, der in der Tabelle selbst nicht enthalten ist. Durch diese Vorgehensweise kommt die Steuereinrichtung mit einer Tabelle aus, die nur eine geringe Anzahl von Werten enthält und daher nur einen geringen speichertechnischen Aufwand erfordert.

Die Steuereinrichtung verwendet bei der Ansteuerung einer vorbestimmten Solltemperatur jedoch einen Öffnungsgrad, der über einem Öffnungsgrad liegt, der für die angesteuerte Solltemperatur erforderlich wäre. Auf diese Art und Weise kann die gewünschte Solltemperatur rasch erreicht werden.

Vorteilhafter Weise verwendet die Steuereinrichtung dabei einen Öffnungsgrad als Sollöffnungsgrad, der in etwa zwei mal der Differenz zwischen dem Ist-Öffnungsgrad und dem erforderlichen Öffnungsgrad entspricht. Eine solche Öffnungsgrad ermittelt die Steuereinrichtung beispielsweise durch das sogenannte "Zero-Gravity-Verfahren". Bei dieser Vorgehensweise wird das Regelziel in kürzest möglicher Zeit erreicht. Bei Erreichen des Regelzieles bzw. der Solltemperatur setzt die Steuereinrichtung dann den jeweils erreichten Öffnungsgrad als Soll-Öffnungsgrad, um eine weitere Hochregelung der Raumtemperatur zu verhindern.

Die in der Tabelle abgespeicherten Zuordnungswerte zwischen der Solltemperatur und dem entsprechenden Öffnungsgrad werden bei der Auslieferung entsprechend dem allgemein zu erwartenden Anwendungsfall abgespeichert und entsprechen einer ersten Näherung an die üblichen Gegebenheiten. Im Einzelfall sind die den Regelvorgang beeinflussenden Parameter wie beispielsweise die Hydraulik, die Vorlauftemperatur, die Raumgröße oder die Heizkörpergröße oft ganz anders als erwartet. In diesem Fall wird das angestrebte Regelziel auch nach einer längeren Zeitspanne nicht erreicht.

Um ein solches Problem zu vermeiden, überprüft die Steuereinrichtung den Erfolg bzw. den Fortschritt des Regelvorganges. Stellt sie dabei nach einer vorgegebenen Zeitspanne von beispielsweise 2 Stunden fest, dass die gewünschte Solltemperatur noch immer nicht erreicht ist, oder aber, stellt sie nach einer vorgegebenen Zeitspanne von 15 Minuten fest, dass die Sollwertänderung unter einem vorbestimmten Wert zurückbleibt, kann sie das Vorliegend einer solchen Situation daraus ableiten. Daraufhin werden die in der Tabelle enthaltenen Tabellenwerte durch andere Tabellenwerte ersetzt, die einen progressiveren Regelfortschritt ermöglichen. Dabei entspricht jetzt z.B. der erforderliche Öffnungsgrad für 20°C 45 % und der erforderliche Öffnungsgrad für 24°C 70%. Auf der Grundlage einer derart veränderten Tabelle lässt sich das gewünschte Regelziel entsprechend eher erreichen.

Möglicherweise stimmen die neuen Tabellenwerte aber immer noch nicht mit der Realität überein. Die Steuereinrichtung ist daher in der Lage, die Tabellenwerte schrittweise an optimale Tabellenwerte anzunähern. Ein solcher Regelvorgang dauerte eine längere Zeit, wie beispielsweise einen ganzen Tag. Aus diesem Grund werden die neuen Tabellenwerte stets nur nach einer vorbestimmten Zeitspanne, wie beispielsweise 24 Stunden, übernommen. Durch diese Vorgehensweise ist eine optimale Anpassung an die individuellen Umgebungsbedingungen möglich.

Alternativ hierzu bestimmt die Steuereinrichtung eine Veränderung des Öffnungsgrades durch eine Multiplikation der Temperaturdifferenz mit einer vorbestimmten ersten Konstante. Dieser Vorgehensweise liegt die Annahme zugrunde, dass zwischen dem Öffnungsgrad und der Temperatur ein näherungsweise linearer Zusammenhang besteht. Entsprechend der Linearität dieses Zusammenhanges würde eine Kennlinie zwischen dem Öffnungsgrad und der Temperatur einer Geraden entsprechen. Eine entsprechende Temperaturdifferenz kann über die Gerade abgetragen, dann einer entsprechenden Veränderung des Öffnungsgrades zugerechnet werden. Mathematisch erfolgt dies durch die Multiplikation der Temperaturdifferenz mit einer ersten Konstanten, die der Steigung dieser Geraden entspricht.

Diese erste Konstante entspricht also einen naturgesetzlichen Zusammenhang zwischen dem Öffnungsgrad und der Temperatur, der experimentell ermittelt wird und der Steuereinrichtung entsprechend mitgeteilt wird. Die Steuereinrichtung speichert den entsprechenden Wert der ersten Konstante und verwendet ihn fortan zur Bestimmung des Öffnungsgrades auf der Grundlage der Temperaturdifferenz. Diese Vorgehensweise ist verhältnismäßig einfach und unkompliziert und führt rasch zur Erreichung des gewünschten Regelzieles.

Die äußeren Bedingungen des Regelprozesses, wie beispielsweise eine erheblich abgefallene Außentemperatur oder eine geöffnete Tür zum Innenraum, können jedoch die Regelbedingungen nachhaltig verändern. Die oben gezeigte Vorgehensweise zur Bestimmung der Veränderung des Öffnungsgrades auf der Grundlage der Temperaturdifferenz unter Berücksichtung einer ersten Konstante führt dann auch nach einer Mehrzahl von Regelschritten nicht zu einer maßgeblichen Veränderung der Temperaturdifferenz. Tritt diese Situation auf, bestimmt die Steuereinrichtung bereits ab dem nächsten Regelschritt den Öffnungsgrad unter Berücksichtung des Produktes der Temperaturdifferenz und einer zweiten Konstante. Die zweite Konstante ist selbstverständlich größer als die erste Konstante, so dass bei gleicher Temperaturdifferenz eine größere Veränderung des Öffnungsgrades resultiert. Würde man zu dieser zweiten Konstante eine Kennlinie zeichnen, entspräche der hierbei auftretende lineare Zusammenhang zwischen dem Öffnungsgrad und der Temperaturdifferenz wiederum einer Geraden, die aber steiler als die erste Gerade ist, da die zweite Konstante wiederum die Steigung der Geraden darstellt.

Eine solche Berücksichtung einer Veränderung der Temperaturdifferenz beziehungsweise einer Berücksichtung der sich nicht verändernden Temperaturdifferenz und der entsprechenden Veränderung der zweiten Konstante kann zu einer noch höheren Regelgenauigkeit und zu noch kürzeren Regelzeiten führen.

Der Wert der zweiten Konstante ist dabei wiederum experimentell zu bestimmen und der Steuereinrichtung fest einzugeben. Die Anzahl der Regelschritte nach der die entsprechende Umschaltung zwischen der ersten und zweiten Konstante erfolgt, und der vorbestimmte Wert für die Veränderung der Temperaturdifferenz sind ebenso experimentell zu bestimmen, beispielsweise kann die Anzahl der Regelschritte zehn betragen und der vorbestimmte Wert 0,2 Grad. Selbstverständlich muss bei einer höheren Anzahl von Regelschritten auch ein höherer vorbestimmter Wert verwendet werden.

Da sich die äußeren Regelbedingungen, wie beispielsweise die Außentemperatur, nur verhältnismäßig langsam ändern, bleibt die Steuereinrichtung für eine vorbestimmte Zeitdauer nach Umschaltung auf die zweite Konstante bei dieser Konstante. Die vorbestimmte Zeitdauer kann entsprechend der am häufigsten auftretenden Störgröße gewählt werden. Bei besonderer Berücksichtigung der Außentemperatur kann sich hier ein Wert von 24 Stunden empfehlen. Auch diese vorbestimmte Zeitdauer wird der Steuereinrichtung vorzugsweise fest vorprogrammiert, ist aber gegebenenfalls durch die Bedienperson veränderbar.

Bei der gezeigten Vorgehensweise mit der Verwendung einer Kennlinie in Form einer Geraden handelt es sich um eine alternative Vorgehensweise zu der zuvor gezeigten Vorgehensweise, die eine Tabelle für mehr oder weniger denselben Zweck heranzieht. Bei der Verwendung einer Kennlinie wurde vorstehend lediglich die Verwendung einer Konstante angesprochen. Dies entspricht dem Umstand, dass bei der Verwendung der Kennlinie eine bestehende Sollwert-Differenz in eine Öffnungsgrad-Differenz umgesetzt wird. Wenn mittels der Kennlinie ein konkreter Öffnungsgrad zu einem einzelnen Solltemperaturwert ermittelt werden soll, ist zu dem Produkt aus der ersten Konstante, die der Steigung der geraden Kennlinie entspricht, noch der Y-Achsenabschnitt zu addieren.

Das Bewegungssignal der Bewegungserfassungseinrichtung zur Erfassung einer Bewegung der Antriebseinrichtung wird von der Steuereinrichtung während der gesamten Zeitdauer der Ansteuerung des Motors erfasst. Es besteht im Wesentlichen aus einer Folge von Impulsen, die beispielsweise bei Hindurchtreten einer Markierung an einem Zahnrad des Getriebes 7 durch eine Lichtschranke erzeugt werden. Die Anzahl der Impulse pro Zeiteinheit entspricht dabei der Geschwindigkeit der erfassten Bewegung.

Die Steuereinrichtung kann also durch die Erfassung der Anzahl der Impulse pro Zeiteinheit eine gleichmäßige Geschwindigkeit der Antriebseinrichtung sicher stellen. Dies gelingt ihr durch eine Veränderung der dem Motor zugeführten Leistung, vorzugsweise indem sie die an den Motor angelegte Spannung erhöht oder verringert. Da die Dauer des Betriebs der Antriebseinrichtung mit der gewünschten Veränderung des Öffnungsgrades einher geht, kommt es bei dem hier gezeigten Heizkörperregler auch auf die Einhaltung der gewünschten Geschwindigkeit an. Eine entsprechende Überwachung und Steuerung der Geschwindigkeit trägt also zu einer Genauigkeit der Regelung bei.

Wird jedoch die Geschwindigkeit lediglich konstant geregelt, so führt eine einmalige Unterschreitung der vorbestimmten Geschwindigkeit bereits zu einer Unterschreitung der Veränderung des gewünschten Öffnungsgrades des zu betätigenden Heizkörperventils. Um eine genaue Erreichung des Regelziels pro Regelschritt sicher zu stellen, ist es daher von großem Vorteil, wenn auf eine entsprechende Unterschreitung der vorbestimmten Geschwindigkeit hin eine geeignete zeitweise Überschreitung der vorbestimmten Geschwindigkeit herbei geführt wird. Eine solche zeitweise Überschreitung der vorbestimmten Geschwindigkeit ist dann geeignet, wenn sie spätestens bis zur Beendigung des jeweiligen Regelschrittes zu einem Ausgleich des durch die Unterschreitung der vorbestimmten Geschwindigkeit aufgetretenen Unterschreitung der Veränderung des Öffnungsgrades führt. Selbstverständlich kann bei längeren Regelschritten diese Kompensation auch schon vor Beendigung des Regelschrittes auftreten. In jedem Fall ist die Dauer und die Höhe der zeitweisen Überschreitung der vorbestimmten Geschwindigkeit durch die Steuereinrichtung festzulegen. Das Ausmaß der jeweiligen Überschreitung bzw. der jeweiligen Zeitdauer orientiert sich dabei an dem Ausmaß der Unterschreitung und zur Verfügung stehenden restlichen Zeitdauer des jeweiligen Regelschrittes.

Die Ursachen, die zu einer Unterschreitung der vorbestimmten Geschwindigkeit führen können, sind vielfältig. Da der beschriebene Heizkörperregler vorzugsweise batteriebetrieben ist, kann die Unterschreitung der Geschwindigkeit beispielsweise durch eine sich langsam entladende Batterie auftreten. Auch kann das Ventil durch eine häufige Benutzung über eine längere Zeitdauer schwergängig werden, beispielsweise durch eine Verkalkung desselben. Auch Temperaturunterschiede in der Vorlauftemperatur können eine Veränderung der Gängigkeit des Ventils nach sich ziehen. Unabhängig von der Ursache für die Veränderung der Gängigkeit des Ventils kann diese durch die gezeigte Maßnahme aber wirkungsvoll ausgeregelt werden.

Da sich die äußeren Bedingungen, die zu einer Veränderung der Gängigkeit des Ventils führen nur sehr langsam ändern, ist es von Vorteil, wenn die Steuereinrichtung bereits bei dem nächsten Regelschritt wieder mit dem Regelwert rechnen kann. Zu diesem Zweck merkt sich die Steuereinrichtung die für die Erreichung der vorbestimmten Geschwindigkeit erforderliche Leistung, beispielsweise indem sie einen entsprechenden Wert abspeichert.

Heizkörperventile weisen in der Regel einen Ventilstößel auf, über den der Heizkörperregler das Ventil betätigt. Dieser Ventilstößel wird durch eine Feder vorgespannt, so dass er sich von selbst stets in eine Position bewegen würde, die einer geöffneten Position des Ventils entspricht. Durch die Vorspannkraft der Feder ist daher das Schließen des Ventils mit einem höheren Kraftaufwand verbunden als das Öffnen des Ventils. Aus diesem Grund ist es von Vorteil, wenn sich die Steuereinrichtung einen ersten Wert merkt, der einer Leistung entspricht, die der Antriebseinrichtung für eine Schließbewegung zuzuführen ist, und einen zweiten Wert, der einer Motorleistung entspricht, die zum Öffnen des Ventils erforderlich ist. Durch diese Maßnahme kann sich der gezeigte Heizkörperregler schnell auf die jeweilige Regelsituation einstellen, ohne dass es zu einer Verzögerung bei der Regelung kommt.

## Patentansprüche

1. Heizkörperregler mit
(a) einer Antriebseinrichtung (2) zum Betätigen eines Heizkörperventils (1),
(b) einer Bewegungserfassungseinrichtung (5) zur Erfassung einer Bewegung der Antriebseinrichtung und zum Ausgeben eines Bewegungssignals,
(c) einer Temperaturerfassungseinrichtung (4) zur Erfassung der Ist-Temperatur und zum Ausgeben eines Temperatursignals und
(d) einer Steuereinrichtung (3)
(d1) zum Erzeugen eines Steuersignals für die Antriebseinrichtung unter Berücksichtigung des Temperatursignals und einer den Öffnungsgrad des Heizkörperventils betreffenden Information und
(d2) zum Erfassen des Erreichens einer Endposition des Heizkörperventils anhand des Bewegungssignals,
(e) wobei die Steuereinrichtung bei Erreichen einer Endposition die den Öffnungsgrad betreffende Information aktualisiert.

2. Heizkörperregler nach Anspruch 1, **dadurch gekennzeichnet, dass** die den Öffnungsgrad betreffende Information bei jeder Ansteuerung der Antriebseinrichtung entsprechend dem jeweiligen Steuersignal aktualisiert wird, wenn keine Endposition erreicht wird.

3. Heizkörper nach Anspruch 1, **dadurch gekennzeichnet, dass** bei Inbetriebnahme des Heizkörperreglers eine den Öffnungsgrad betreffende Information verwendet wird, die einem vorbestimmten Öffnungsgrad entspricht.

4. Heizkörperregler nach Anspruch 3, **dadurch gekennzeichnet, dass** der vorbestimmte Öffnungsgrad bei einer Erstinbetriebnahme einem mittleren Öffnungsgrad entspricht.

5. Heizkörperregler nach Anspruch 3, **dadurch gekennzeichnet, dass** der vorbestimmte Öffnungsgrad bei einer Wiederinbetriebnahme dem letzten aktuellen Öffnungsgrad entspricht.

6. Heizkörperregler nach Anspruch 1, **dadurch gekennzeichnet, dass** die Steuereinrichtung entsprechend einer Temperaturdifferenz zwischen einer Soll-Temperatur und der Ist-Temperatur die Antriebsdauer und die Antriebsrichtung der Antriebseinrichtung bestimmt.

7. Heizkörperregler nach Anspruch 6, **dadurch gekennzeichnet, dass** die Steuereinrichtung die Antriebsdauer verdoppelt, wenn die Temperaturdifferenz einen vorbestimmten Wert übersteigt.

8. Heizkörperregler nach Anspruch 6, **dadurch gekennzeichnet, dass** die Steuereinrichtung eine Veränderung des Öffnungsgrades mit Hilfe einer Tabelle bestimmt, die einer Mehrzahl von unterschiedlichen Solltemperaturen einen jeweils entsprechenden Öffnungsgrad zuordnet.

9. Heizkörperregler nach Anspruch 8, **dadurch gekennzeichnet, dass** die Steuereinrichtung bei Solltemperaturwerten, die zwischen zwei Tabellenwerten liegen, den entsprechenden Öffnungsgrad durch Interpolation der benachbarten Öffnungsgrade ermittelt.

10. Heizkörperregler nach Anspruch 8 oder 9, **dadurch gekennzeichnet, dass** die Steuereinrichtung als Sollöffnungsgrad einen Öffnungsgrad verwendet, der über dem erforderlichen Öffnungsgrad liegt.

11. Heizkörperregler nach Anspruch 10, **dadurch gekennzeichnet, dass** die Steuereinrichtung als Sollöffnungsgrad einen Öffnungsgrad verwendet, der etwa zweimal der Differenz zwischen dem Ist-Öffnungsgrad und dem erforderlichen Öffnungsgrad entspricht.

12. Heizkörperregler nach Anspruch 10 oder 11, **dadurch gekennzeichnet, dass** die Steuereinrichtung bei Erreichen der Solltemperatur den erreichten Öffnungsgrad als Sollöffnungsgrad verwendet.

13. Heizkörperregler nach Anspruch 8, **dadurch gekennzeichnet, dass** die Steuereinrichtung die Tabellenwerte entsprechend verändert, wenn die Solltemperatur nicht innerhalb einer vorgegebenen Zeitspanne erreicht wird.

14. Heizkörperregler nach Anspruch 13, **dadurch gekennzeichnet, dass** die Steuereinrichtung die neuen Tabellenwerte nach einer vorbestimmten Zeit für die nachfolgenden Steuervorgänge übernimmt.

15. Heizkörperregler nach Anspruch 6, **dadurch gekennzeichnet, dass** die Steuereinrichtung eine Veränderung des Öffnungsgrades unter Berücksichtigung des Produktes der Temperaturdifferenz und einer ersten Konstanten bestimmt.

16. Heizkörperregler nach Anspruch 15, **dadurch gekennzeichnet, dass** die Steuereinrichtung eine Veränderung des Öffnungsgrades unter Berücksichtung des Produktes der Temperaturdifferenz und einer zweiten Konstante bestimmt, die größer als die erste Konstante ist, wenn eine Veränderung der Temperaturdifferenz nach einer vorbestimmten Anzahl von Regelschritten unter Verwendung der ersten Konstante unter einem vorbestimmten Wert bleibt.

17. Heizkörperregler nach Anspruch 16, **dadurch gekennzeichnet, dass** die Steuereinrichtung die Verwendung der zweiten Konstante nach Erreichen des Sollwertes für eine vorbestimmte Zeitdauer fortsetzt.

18. Heizkörperregler nach Anspruch 1, **dadurch gekennzeichnet, dass** das Bewegungssignal eine Folge von Impulsen umfasst, wobei die Impulsanzahl pro Zeiteinheit der Geschwindigkeit der erfassten Bewegung entspricht.

19. Heizkörperregler nach Anspruch 18, **dadurch gekennzeichnet, dass** die Steuereinrichtung die Geschwindigkeit durch eine geeignete Veränderung der dem Motor zugeführten Leistung auf einem vorbestimmten Wert hält.

20. Heizkörperregler nach Anspruch 19, **dadurch gekennzeichnet, dass** die Steuereinrichtung während eines Regelschrittes eine zeitweise Unterschreitung der vorbestimmten Geschwindigkeit durch eine geeignete zeitweise Überschreitung der vorbestimmten Geschwindigkeit spätestens bis zur Beendigung des Regelschrittes ausgleicht.

21. Heizkörperregler nach Anspruch 19, **dadurch gekennzeichnet, dass** sich die Steuereinrichtung die für die Erreichung der vorbestimmten Geschwindigkeit erforderliche Leistung merkt und bei einem nachfolgenden Regelschritt verwendet.

22. Heizkörperregler nach Anspruch 21, **dadurch gekennzeichnet, dass** sich die Steuereinrichtung einen ersten Leistungswert für die Schließbewegung des Ventils und einen zweiten Leistungswert für eine Bewegung zum Öffnen des Ventils merkt.

## Claims

1. Radiator controller having
(a) a driving device (2) for actuating a radiator valve (1),
(b) a motion detector (5) for detecting a movement of the driving device and for outputting a motion signal,
(c) a temperature detecting device (4) for detecting the actual temperature and for outputting a temperature signal, and
(d) a control device (3)
(d1) for generating a control signal for the driving device by taking account of the temperature signal and of an information item relating to the opening degree of the radiator valve, and
(d2) for detecting the reaching of an end position of the radiator valve with the aid of the motion signal,
(e) the control device updating the information item relating to the opening degree upon the reaching of an end position.

2. Radiator controller according to Claim 1, **characterized in that** upon each activation of the driving device the information item relating to the opening degree is updated in accordance with the respective control signal when no end position is reached.

3. Radiator according to Claim 1, **characterized in that** upon startup of the radiator controller use is made of an information item relating to the opening degree which corresponds to a predetermined opening degree.

4. Radiator controller according to Claim 3, **characterized in that** the predetermined opening degree corresponds to a middle opening degree upon initial startup.

5. Radiator controller according to Claim 3, **characterized in that** the predetermined opening degree corresponds to the last current opening degree upon renewed startup.

6. Radiator controller according to Claim 1, **characterized in that** the control device determines the drive period and the drive direction of the driving device in accordance with a temperature difference between a desired temperature and the actual temperature.

7. Radiator controller according to Claim 6, **characterized in that** the control device doubles the drive period when the temperature difference exceeds a predetermined value.

8. Radiator controller according to Claim 6, **characterized in that** the control device determines a change in the opening degree with the aid of a table which assigns a plurality of different desired temperatures to a respectively corresponding opening degree.

9. Radiator controller according to Claim 8, **characterized in that** in the event of desired temperature values which lie between two tabular values the control device determines the corresponding opening degree by interpolation of the adjacent opening degrees.

10. Radiator controller according to Claim 8 or 9, **characterized in that** as desired opening degree the control device makes use of an opening degree which lies above the required opening degree.

11. Radiator controller according to Claim 10, **characterized in that** as desired opening degree the control device makes use of an opening degree which corresponds to approximately twice the difference between the actual opening degree and the required opening degree.

12. Radiator controller according to Claim 10 or 11, **characterized in that** upon the reaching of the desired temperature the control device makes use as the desired opening degree of the opening degree reached.

13. Radiator controller according to Claim 8, **characterized in that** the control device changes the tabular values correspondingly when the desired temperature is not reached within a prescribed time interval.

14. Radiator controller according to Claim 13, **characterized in that** the control device adopts the new tabular values for the subsequent control operations after a predetermined time.

15. Radiator controller according to Claim 6, **characterized in that** the control device determines a change to the opening degree by taking account of the product of the temperature difference and a first constant.

16. Radiator controller according to Claim 15, **characterized in that** the control device determines a change in the opening degree by taking account of the product of the temperature difference and a second constant, which is greater than the first constant, when a change in the temperature difference after a predetermined number of control steps remains below a predetermined value given the use of the first constant.

17. Radiator controller according to Claim 16, **characterized in that** the control device continues the use of the second constant for a predetermined period after the reaching of the desired value.

18. Radiator controller according to Claim 1, **characterized in that** the motion signal comprises a sequence of pulses, the number of pulses per time unit corresponding to the speed of the detected movement.

19. Radiator controller according to Claim 18, **characterized in that** the control device keeps the speed at a predetermined value by suitably changing the power fed to the motor.

20. Radiator controller according to Claim 19, **characterized in that** during a control step the control device equalizes a temporary undershooting of the predetermined speed by a suitable temporary overshooting of the predetermined speed, doing so at the latest by the end of the control step.

21. Radiator controller according to Claim 19, **characterized in that** the control device remembers the power required to reach the predetermined speed, and makes use thereof in a following control step.

22. Radiator controller according to Claim 21, **characterized in that** the control device remembers a first power value for the closing movement of the valve, and a second power value for a movement to open the valve.

## Revendications

1. Régulateur de corps de chauffe comprenant
(a) un dispositif d'entraînement (2) pour actionner une vanne de corps de chauffe (1),
(b) un dispositif de détection de mouvement (5) pour détecter un mouvement du dispositif d'entraînement et pour délivrer un signal de mouvement,
(c) un dispositif de détection de température (4) pour détecter la température réelle et pour délivrer un signal de température et
(d) un dispositif de commande (3)
(d1) pour générer un signal de commande pour le dispositif d'entraînement en tenant compte du signal de température et d'une information concernant le degré d'ouverture de la vanne de corps de chauffe et
(d2) pour détecter une position finale atteinte de la vanne de corps de chauffe à l'aide du signal de mouvement,
(e) le dispositif de commande actualisant l'information concernant le degré d'ouverture lorsqu'une position finale est atteinte.

2. Régulateur de corps de chauffe selon la revendication 1, **caractérisé en ce que** l'information concernant le degré d'ouverture est actualisée à chaque commande du dispositif d'entraînement conformément au signal de commande correspondant lorsqu'aucune position finale n'est atteinte.

3. Régulateur de corps de chauffe selon la revendication 1, **caractérisé en ce que** lors de la mise en service du régulateur de corps de chauffe est utilisée une information concernant le degré d'ouverture qui correspond à un degré d'ouverture prédéfini.

4. Régulateur de corps de chauffe selon la revendication 3, **caractérisé en ce que** le degré d'ouverture prédéfini lors d'une première mise en service correspond à un degré d'ouverture moyen.

5. Régulateur de corps de chauffe selon la revendication 3, **caractérisé en ce que** le degré d'ouverture prédéfini lors d'une remise en service correspond au dernier degré d'ouverture actuel.

6. Régulateur de corps de chauffe selon la revendication 1, **caractérisé en ce que** le dispositif de commande détermine la durée d'entraînement et le sens d'entraînement du dispositif d'entraînement conformément à une différence de température entre une température de consigne et la température réelle.

7. Régulateur de corps de chauffe selon la revendication 6, **caractérisé en ce que** le dispositif de commande double la durée d'entraînement lorsque la différence de température dépasse une valeur prédéfinie.

8. Régulateur de corps de chauffe selon la revendication 6, **caractérisé en ce que** le dispositif de commande détermine une modification du degré d'ouverture à l'aide d'un tableau qui associe une pluralité de températures de consigne différentes à un degré d'ouverture correspondant respectif.

9. Régulateur de corps de chauffe selon la revendication 8, **caractérisé en ce que** le dispositif de commande, en présence de températures de consigne qui sont comprises entre deux valeurs du tableau, détermine le degré d'ouverture correspondant par interpolation des degrés d'ouverture voisins.

10. Régulateur de corps de chauffe selon la revendication 8 ou 9, **caractérisé en ce que** le dispositif de commande utilise comme degré d'ouverture de consigne un degré d'ouverture qui se trouve au-dessus du degré d'ouverture nécessaire.

11. Régulateur de corps de chauffe selon la revendication 10, **caractérisé en ce que** le dispositif de commande utilise comme degré d'ouverture de consigne un degré d'ouverture qui correspond approximativement à deux fois la différence entre le degré d'ouverture réel et le degré d'ouverture nécessaire.

12. Régulateur de corps de chauffe selon la revendication 10 ou 11, **caractérisé en ce que** le dispositif de commande, lorsque la température de consigne est atteinte, utilise le degré d'ouverture atteint comme degré d'ouverture de consigne.

13. Régulateur de corps de chauffe selon la revendication 8, **caractérisé en ce que** le dispositif de commande modifie en conséquence les valeurs du tableau lorsque la température de consigne n'est pas atteinte au sein d'un intervalle de temps prédéfini.

14. Régulateur de corps de chauffe selon la revendication 13, **caractérisé en ce que** le dispositif de commande prend en charge les nouvelles valeurs du tableau pour les opérations de commande suivantes après une durée prédéfinie.

15. Régulateur de corps de chauffe selon la revendication 6, **caractérisé en ce que** le dispositif de commande détermine une modification du degré d'ouverture en tenant compte du produit de la différence de température et d'une première constante.

16. Régulateur de corps de chauffe selon la revendication 15, **caractérisé en ce que** le dispositif de commande détermine une modification du degré d'ouverture en tenant compte du produit de la différence de température et d'une deuxième constante, laquelle est supérieure à la première constante, lorsqu'une modification de la différence de température après un nombre prédéfini d'étapes de régulation en utilisant la première constante reste inférieure à une valeur prédéfinie.

17. Régulateur de corps de chauffe selon la revendication 16, **caractérisé en ce que** le dispositif de commande poursuit l'utilisation de la deuxième constante après avoir atteint la valeur de consigne pendant une durée prédéfinie.

18. Régulateur de corps de chauffe selon la revendication 1, **caractérisé en ce que** le signal de mouvement comprend une suite d'impulsions, le nombre d'impulsions par unité de temps correspondant à la vitesse du mouvement détecté.

19. Régulateur de corps de chauffe selon la revendication 18, **caractérisé en ce que** le dispositif de commande maintient la vitesse par une modification appropriée de la puissance acheminée au moteur à une valeur prédéfinie.

20. Régulateur de corps de chauffe selon la revendication 19, **caractérisé en ce que** le dispositif de commande, pendant une étape de régulation, compense un franchissement vers le bas temporaire de la vitesse prédéfinie par un dépassement temporaire approprié de la vitesse prédéfinie au plus tard jusqu'à ce que l'étape de régulation soit terminée.

21. Régulateur de corps de chauffe selon la revendication 19, **caractérisé en ce que** le dispositif de commande retient la puissance nécessaire pour atteindre la vitesse prédéfinie et l'utilise lors d'une étape de régulation suivante.

22. Régulateur de corps de chauffe selon la revendication 21, **caractérisé en ce que** le dispositif de commande retient une première valeur de puissance pour le mouvement de fermeture de la vanne et une deuxième valeur de puissance pour un mouvement visant à ouvrir la vanne.
